# EUROPEAN PATENT SPECIFICATION

(11) **EP 1 540 535 B1**
(45) Date of publication and mention of the grant of the patent: **18.02.2009**
(21) Application number: 03714556.2
(22) Date of filing: 24.04.2003
(51) Int. Cl.: G06F 17/40

(54) **METHOD AND SYSTEM FOR DETECTING CHANGE IN DATA STREAMS**
VERFAHREN UND SYSTEM ZUR ERKENNUNG VON DATENSTROMÄNDERUNGEN
PROCEDE ET SYSTEME POUR DETECTER UN CHANGEMENT DANS DES TRAINS DE DONNEES

(30) Priority: 24.04.2002 GB 0209368
(43) Date of publication of application: 15.06.2005
(73) Proprietor: Cerebrus Solutions Limited, Harlow CM20 2BN (GB)
(72) Inventor: TOMS, Alvin, David, Perth, Western Australia 6005 (AU); BOLT, George, Midhurst, Hampshire GU29 9LL (GB); MANSLOW, John, Southhampton, Hampshire SO18 2HH (GB)
(74) Representative: Merryweather, Colin Henry
(86) International application number: PCT/AU2003/000493
(87) International publication number: WO 2003/091911

(56) References cited:
- US-A- 4 809 817
- US-A- 5 354 957
- US-A- 5 603 331
- US-A- 5 847 266
- US-B1- 6 262 550
- US-B1- 6 321 338
- IGUCHI M ET AL: "Network surveillance for detecting intrusions" INTERNET WORKSHOP, 1999. IWS 99 OSAKA, JAPAN 18-20 FEB. 1999, PISCATAWAY, NJ, USA,IEEE, US, 18 February 1999 (1999-02-18), pages 99-106, XP010365600 ISBN: 0-7803-5925-9
- DIHENG QU ET AL: "Statistical anomaly detection for link-state routing protocols" NETWORK PROTOCOLS, 1998. PROCEEDINGS. SIXTH INTERNATIONAL CONFERENCE ON AUSTIN, TX, USA 13-16 OCT. 1998, LOS ALAMITOS, CA, USA,IEEE COMPUT. SOC, US, 13 October 1998 (1998-10-13), pages 62-70, XP010309350 ISBN: 0-8186-8988-9

## Description

### FIELD OF THE INVENTION

The present invention relates to the detection of changes in data streams. In particular, the present invention seeks to detect a change in a data stream created by a target event.

### BACKGROUND OF THE INVENTION

Change detection systems find a wide variety of applications, including, but not limited to, fraud detection (for example, looking for changes in patterns on credit card usage), security systems (for example, detecting attacks on computer networks), process, fault and condition monitoring (for example, looking for changes in the pattern of vibration in vehicle engines), environmental monitoring systems (for example, identifying chemical spillage and pollution), and health monitoring (for example, to alert medical workers of sudden changes in the condition of patients). To detect changes in practice, entities and processes are typically monitored by taking regular measurements of critical parameters such as those parameters that are most likely to contain information about the changes of interest. Changes are usually identified by comparing the parameters to thresholds, designed to indicate a target event, with an alert generated if the thresholds are exceeded. Such thresholds are usually not fixed, but are functions of statistics extracted from a data stream containing information about the system being monitored, such as its mean, variance or percentiles.

The change detection performance of such systems is limited by several factors. Firstly, unless the thresholds are effectively set to extreme percentiles (such as the 99^{th}) the number of false alerts - those generated even when no significant change in the data stream has occurred - will be too high for many practical applications. For example, a classic application of the invention is to monitor calls in large telecommunications networks for unusual activity that may be indicative of fraud. Since it is not uncommon for such networks to support 100 million calls per day, a threshold based on the 99^{th} percentile would generate around 1 million false alerts per day (assuming that the percentile estimate is accurate, and that the call statistics are ergodic), which is over 1,000 times the number that can be processed by the fraud investigation teams employed by most telecommunications companies. In practice, gradual changes in the way in which the telecommunications network is used will cause the false alert rate to be even higher than the 1 percent that the 99^{th} percentile would prima facie imply. For example, the growth of internet usage has produced a gradual increase in the number of exceptionally long calls - those over two hours - which has been sustained over several years. The affects of such changes on the false alert rate of percentile-based algorithms cannot readily be alleviated by increasing the percentile used to, for example, the 999^{th} because not only does that increase the risk of missing the more subtle frauds, but more extreme percentiles also take longer to estimate. This time factor is important because a reasonable estimate of the percentile must be formed before the algorithm can produce useful fraud alerts, increasing the risk that major frauds are missed because they are committed before the algorithm is ready to detect them.

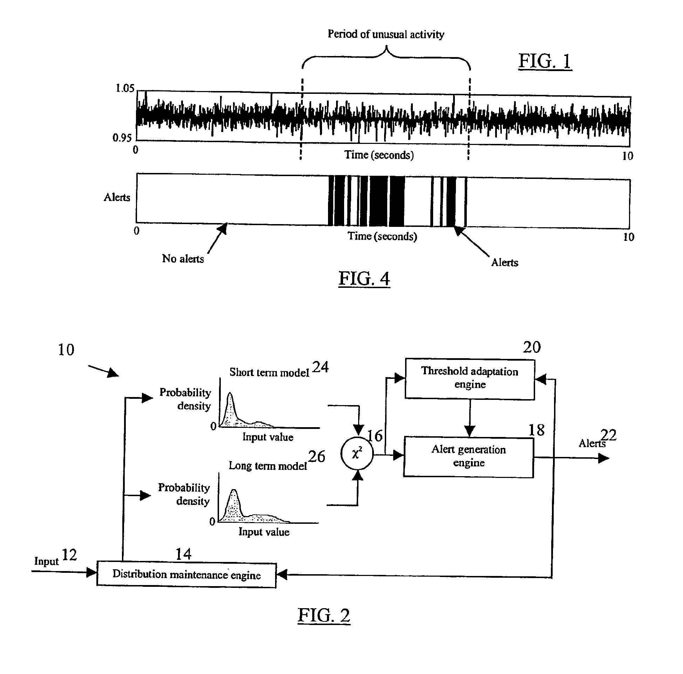

A more fundamental limitation of the use of thresholds is that not all changes that can conceivably occur in a data stream can be detected by them. Assume, for example, that a change detection algorithm is used to monitor the condition of the suspension of a car through the periodic measurement of the extension of a spring attached to one of the car's wheels. Ten seconds worth of simulated measurements are shown in the top graph shown in Figure 1. Assuming that the normal behaviour of the suspension is that there is wide variation in the spring length, as shown in the regions of the top graph of Figure 1 that lie outside the dashed lines, it is possible that some modes of failure, such as periodic seizure, can cause the spring length to show less variation, as occurs between the dashed lines. This change in behaviour cannot be detected using thresholds because there is no threshold that can be placed on the measured parameter - that is, spring length - that would cause substantially more alerts to be generated when the suspension behaves pathologically than when it behaves normally.

In summary, threshold based systems can only detect changes where there is a substantial shift in the proportion of the probability mass of the contents of the data stream from below to above the threshold (of vice versa) and the choice of threshold is necessarily restricted to extreme percentiles to minimise the rate at which false alerts are generated.
M. Iguchi and S. Goto, in their paper "Network Surveillance for Detecting Intrusions", 0-7803-9939-0/99, 1999IEEE, describe a method of capturing and analysing a network traffic pattern with "port profiling" by comparing a live traffic pattern with expected behaviour recorded in the port profile.

### SUMMARY OF THE PRESENT INVENTION

The present invention seeks to provide an improved method of detecting changes in data streams, and the information they contain.

According to a first aspect of the present invention there is provided a method of detecting changes in a data stream comprising the steps of:
maintaining a short term distribution that models the data stream, wherein the short term distribution is updated when the input is received;
maintaining a long term distribution that models the data stream, wherein the long term distribution is updated when the input data is received;
determining a difference between the short term distribution and the long term distribution; and
applying a statistical measure to the difference and generating an alert if the measure of the difference exceeds a threshold,
characterised in that the method further comprises the step of:
returning at least one of the short term distribution and the long term distribution to a state just before it was updated to include the input that caused the alert when the alert is generated.

Preferably the short term distribution is a model of probability distributions that describe the data stream. Preferably the long term distribution is a model of probability distributions that describe the data stream.

Preferably the short term distribution is a recursively estimated weighted distribution of all the data received thus far. Preferably the long term distribution is a recursively estimated weighted distribution of all of the data received thus far.

Preferably when an alert is generated the short term distribution is returned to a state just before it was updated to include an input that caused the alert. Preferably the long term distribution is also returned to a state just before it was updated to include an input that caused the alert.

Preferably an alert is generated if the difference between the distributions exceeds an adaptive alert threshold. Preferably the adaptive alert threshold is determined as some function of the short and long term distributions, previous values of the threshold, the contents of the data stream, or a subset thereof. Preferably the adaptive alert threshold is formed from a predictability measure and a variability measure. Preferably the predictability measure is a moving average of the difference between the short term distribution and the long term distribution. Preferably the variability measure is a moving average of the absolute difference between the short term distribution and the long term distribution and the predictability measure. Preferably neither the predictability nor variability measures are updated when an alert is generated.

Preferably the alert generated includes information in the data stream and/or a function of information in the data stream. Typically, the alert includes a propensity measure as an indication of the severity of change. Preferably the propensity measure is calculated by dividing the difference between the measure of difference between the short term distribution and the long term distribution and the alert threshold by the variability measure.

Preferably the method includes a step of maintaining an estimate of the amounts by which the sensitivity to the alert threshold would be needed to have been adjusted in order to not have generated an alert that turned out not to be caused by an event of interest since the last time it was instructed to adapt.

Preferably the sensitivity adjustment estimate is increased by an additive constant each time an alert is generated and decays exponentially with each input received.

Preferably a lead period may be provided during which alerts cannot be generated and the short term distribution and the long term distribution are adapted to all inputs within that period.

Alerts may also be suppressed by inputs that are above a configurable lower percentile or below a configurable upper percentile. The lower percentile and upper percentile are both estimated from the long term probability distribution.

According to a second aspect of the present invention there is provided a system for detecting changes in a data stream comprising:
distribution maintenance engine configured to:
   maintain a short term distribution that models data stream, wherein the short term distribution is updated when input data is received; and
   maintain a long term distribution that models the data stream, wherein the long term distribution is updated when the input data is received;
means for determining a difference between the short term distribution and the long term distribution, and
an alert generation engine configured to apply a statistical measure to the difference and to generate an alert if the measure of the difference exceeds a threshold,
characterised in that the distribution maintenance engine is further configured to return at least one of the short term distribution and the long term distribution to a state just before it was updated to include the input that caused the alert when the alert is generated.

Preferably the system further comprises a threshold adaption engine configured to adaptively determine the threshold. Preferably the distribution maintenance engine is configured to return the short term distribution to a state just before is was updated, when an alert is generated. Preferably the distribution maintenance engine is also configured to return the long term distribution to a state just before it was updated, when an alert is generated.

### BRIEF DESCRIPTION OF THE DRAWINGS

In order to facilitate a better understanding of the nature of the invention, preferred embodiments will now be described in greater detail, by way of example only, with reference to the accompanying drawings in which:
Figure 1 is an example of simulated measurements;
Figure 2 is a schematic representation of a preferred embodiment of a system for detecting changes in the properties of a data stream according to the present invention;
Figure 3 is a flow chart showing the preferred embodiment of a method of detecting changes in the properties of a data stream in accordance with the present invention; and
Figure 4 is a representation of examples of alerts generated in response to the change in simulated measurements of Figure 1.

### DETAILED DESCRIPTION OF PREFERRED EMBODIMENTS

Referring to Figure 2 there is shown a system 10 for detecting changes in the properties of a data stream 12 to produce alerts 22 that a target event may be indicated within the data stream 12. The system includes a distribution maintenance engine 14 for maintaining a short term distribution 24 and a long term distribution 26; a means 16 for applying a statistical measure to the difference between the short term distribution 24 and long term distribution 26; an alert generation engine for generating alerts 22 and a threshold adaption engine 20 for adapting an alert generating threshold to certain conditions.

In the present invention, the system 10 may be implemented in the form of a computer or a network of computers programmed to perform each of the stages of processing the data from the data stream. For example, a single computer could be programmed to run the system 10 or a dedicated computer may be programmed to run each of the components of the system 10.

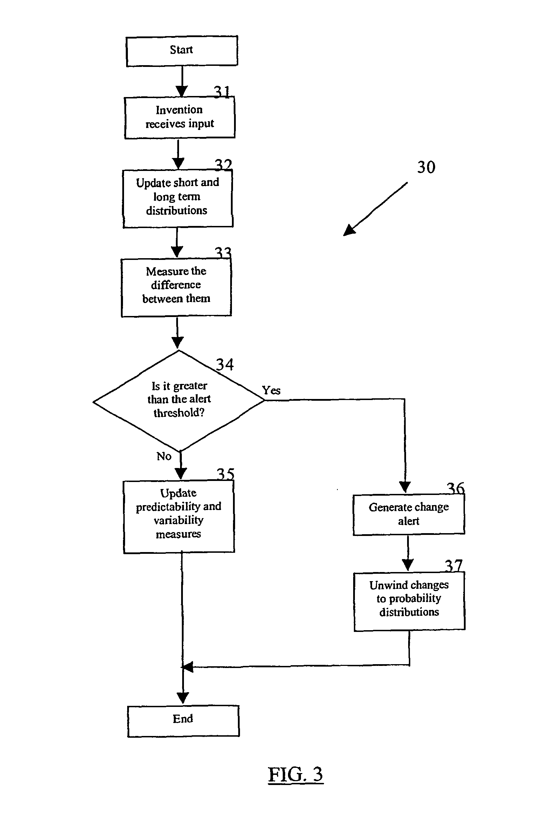

Referring now to Figures 2 and 3, the short term distribution 24 and long term distribution 26 are recursively estimated weighted distributions of all input data 12 received. They require no explicit storage of the contents of the data stream 12. The short term distribution 24 is a model that weights more recent information in the data stream 12 more highly than the model of the data in the long term distribution, and thus responds more rapidly to changes.

A preferred form of the method of the invention is shown as 30 in Figure 3. The process 30 is undertaken each time the system 10 receives 31 an input. The distribution maintenance engine 14 maintains the short 24 and long 26 term distribution models updating them when an input 12 is received 31 from the data stream.

The optimal periods required for the short 24 and long 26 term models depend on the particular application of the invention and the timescales of the variations that occur within it. For example, when applied to the problem of telecommunications fraud detection, effective periods for the short 24 and long 26 term models have been found to be around 100 and 250 calls respectively. The invention overcomes the limitations of simple threshold-based change detection systems by explicitly modelling the distributions 24 and 26 that describe the data stream 12 and its contents. The short term 24 and long 26 term probability distribution models can each be joint or conditional of several data streams 12, thus permitting the detection of changes in the relationship between the streams and the information they carry.

Additionally, conditional short term and long term probability distribution models allow changes in patterns of sequences of information relating to one or more data streams 12 to be detected. The use of distributions 24 and 26 also means that the system 10 is able to handle arbitrary combinations of continuous and discrete data/information, and hence numeric and categorical information. For example, while searching for telecominunications fraud, it may be useful monitor the cost of calls, and to categorise them as local, national, international, etc.

It is noted that the term probability distribution is usually used when modelling discrete values like integers and densities are usually used when modelling continuous values like real numbers. The present invention can be used for either and throughout this specification the term distribution is intended to encompass densities as well, unless this is clearly not intended.

The different rates of response of the short term 24 and long term 26 distributions to changes in a data stream 12 means a difference between the distributions 24 and 26 that can be measured 33 by suitable means 16 using any of a number of standard statistical measures, such as χ² or the Kullback-Leibler divergence. A measure of the difference between the short 24 and long 26 term distributions is passed to the alert generation engine 18. The alert generation engine 18 checks 34 whether the difference exceeds an adaptive alert threshold, which is maintained by the threshold adaptation engine 20. The adaptive alert threshold is formed from two components: a predictability measure, which is a moving average of the difference between the short 24 and long 26 term distributions; and a variability measure, which is a moving average of the absolute difference between the difference between the short 24 and long term 26 distributions and the predictability measure. Other means of adapting the threshold, and the statistics from which it is formed, can also be considered. For example, in order to improve robustness, the predictability measure may not be updated when the measured difference between the short 24 and long 26 term distributions exceeds some function of the variability measure.

As with the short 24 and long 26 term distributions, the predictability and variability measures (and hence the alert threshold) are updated 35 every time the invention receives an input 12, provided that an alert 22 is not generated. The adaptive alert threshold is typically formed from the sum of the predictability measure and some multiple of the variability measure, where the multiple is a sensitivity parameter that is used to control the invention's sensitivity (note that increasing the sensitivity parameter reduces the invention's sensitivity). Other functions may be used to adapt the alert threshold. For example, setting the threshold to equal the predictability plus a multiple of the variability squared may give improved performance in some applications.

If the difference between the short 24 and long 26 term distributions exceeds the adaptive alert threshold, then the alert generation engine 18 generates 36 an alert signal 22. The alert signal 22 can contain any of the information available within the system, information presented to the system in the data stream 12, and functions of either and/or both. Typically, however, it contains a propensity measure, which indicates the severity of the change, and detailed information about its exact nature, which can be obtained by examining the differences between the short term 24 and long term 26 probability distributions. One of the simplest forms of propensity measure can be derived by dividing the difference between the measure of the difference between the distributions 24 and 26 and the alert threshold by the variability measure. More sophisticated schemes scale the propensity according to the number of alerts recently generated, and non-linearly processes it so that it always lies between zero and one, in order to improve its interpretability. Detailed information about the exact nature of a change in the data stream can be extracted by measuring the contributions of points on the short 24 and long 26 term distributions to the difference that was measured between them. For example, assuming that the χ² measure was used by means 16, the contribution of a point on the short 24 and long 26 term distributions to the measured difference would be given by the χ² measure between the distributions 24 and 26 at the point, divided by the total difference for all points that are sampled. In some circumstances, such as when the distributions 24 and 26 are represented by histograms, the contributions are the same for all points within each histogram bin, and hence only need to be computed once within each. The alert 22 signal may also contain additional information, such as a representation of the long term distribution 26, which provides a description of the statistics of the data stream 12 just prior to the change that generated the alert.

The distribution maintenance engine 14 also unwinds 37 an update that caused an alert 22 to be generated, in order to restore the distributions 24 and 26 to their pre-updated state. Restoring the distributions in this way stops the invention adapting to abnormal changes in behaviour. This prevents it from becoming used to any abnormal behaviour that may be sustained in the short term, guaranteeing that it continues to generate alerts 22 throughout, and ensuring that it does not generate alerts 22 when normal behaviour is resumed.

It is not uncommon for changes in data streams to occur that are of sufficient magnitude to cause any change detection algorithm to generate alerts, but which are not target events of interest to the user of the system 10. For example, when the system 10 is used to monitor the behaviour of a subscriber to a telecommunications service, it may generate alerts if they suddenly start to make international calls, perhaps because a friend or relative has moved to another country. When these alerts are investigated by the telecommunications service provider, they will be found to be innocuous, and the provider will expect to be able to instruct the change detection algorithm that no significant change has occurred, and that it should stop generating alerts for the new behaviour and should adapt to it. The system 10 provides such a facility by maintaining an estimate of the amount by which its sensitivity would have needed to have been adjusted in order not to have generated any alerts since the last time it was instructed to adapt. One simple but effective way to produce such an estimate (which works well when the alert threshold is a linear function of the sensitivity parameter, the difference between the short 24 and long 26 term distributions, and the predictability and variability measures) is to maintain a sensitivity adjustment estimate that is increased by an additive constant each time an alert 22 is generated, and decays exponentially with each input the invention receives. The additive constant and the rate of decay can be determined empirically to give a good trade-off between over-adjustment and the resulting under-sensitivity, and under-adjustment and inadequate desensitisation. When the system 10 receives an adapt signal from the user, it increases its sensitivity parameter by an amount equal to the largest value taken by the sensitivity adjustment estimate since the last time it was instructed to adapt.

Two additional features are supported by the system 10. The first feature allows the method 30 to be applied to data streams 12 that exhibit systematic (i.e. non-random) variation over time. Such variation is frequently encountered when searching for signs of fraud in telecommunications networks. For example, businesses make many calls during weekdays, but few at weekends; conversely, domestic users may make more calls at weekends when some network operators offer lower tariffs. The naïve application of change detection algorithms to these types of data streams can result in large numbers of false alerts as the algorithms respond to the changes in behaviour that occur at the start and end of each weekend. To overcome this problem, the system 10 may support the specification of a lead in period, during which alerts 22 cannot be generated, thereby adapting to all inputs 12. At the end of the lead in period, the number of inputs that were passed to the distribution maintenance engine 14 is recorded and used as the period for updates to the predictability and variability measures, if the number of inputs is larger than the default (which is typically 250 for telecommunications applications). This forces the threshold adaption engine 20 to adjust the alert threshold more slowly than it would by default, with the result that systematic variations in the input stream 12 similar to those that occurred during the lead in period do not generate alerts 22.

The alert generation engine 18 also allows alerts 22 generated by inputs 12 that are above a configurable lower percentile or below a configurable upper percentile (both estimated from the long term probability distribution 26) to be suppressed. This feature is useful when examining records of call costs for fraudulent behaviour which requires alerts to be produced for increases in the number of medium and high cost calls, which are strongly indicative of fraud, but not for increases in the number of low cost calls, which usually are not. The means by which the percentile estimates are obtained depend on the representations of the distributions.

For example, pseudo-code for calculating a percentile from a histogram-based representation is given below:

```
  current_bin = 1;
  accumulated _long_term_probability = 0;

  while (accumulated_long_term_probability + long_term_probability_of (current_bin)
 < required_percentile )
  accumulated_long_term_probability=accumulated_long_term_probability+long_term_probability_of
  (current_bin);
         current_bin = current_bin + 1;

  end

  bin_that_contains_percentile = current_bin;

  percentile = min_of (bin_that_contains_percentile)
         + (max_of (bin_that_contains_percentile) - min_of (bin_that_contains_percentile) )
         *(required_percentile - accumulated_long term_probability)
         / (long_term_probability_of (bin_that_contains_percentile) );
```

Most terms in the pseudo-code are self-explanatory, except for the min_of(.) and max_of(.) functions, which return the smallest and largest values of the input associated with the bin specified in their arguments. The bins are specified by contiguous integers starting at one, and it is assumed that they are ordered according to the ranges of the input that they are associated with - that is, bin one is associated with the smallest values of the input. The algorithm first finds the bin that contains the percentile by looking for the bin associated with the smallest values of the input for which the sum of its long term probability and those of all bins associated with smaller values of the input are greater than the required percentile. The specific location of the percentile within the bin is then calculated by assuming that the probability mass associated with the bin is distributed uniformly within it.

As an example of how the invention is applied in practice, consider an instance of the system 10 that models the distribution of telephone calls across ten different categories. These categories could indicate different groups of 'hot' destinations (telephone numbers frequently called by fraudsters). For example, one category could include all telephone numbers in the Caribbean and Pakistan, while another may include all numbers in Brazil and Argentina. To illustrate the effect of a single call on the invention, Table 1 shows the probabilities associated with each of ten categories in the short term 24 and long term 26 distributions within the invention.

**Table 1**

| Category | Short term probabilities | Long term probabilities | Per category χ² divergence |
|---|---|---|---|
| 1 | 0.1326 | 0.1226 | 0.0008 |
| 2 | 0.0794 | 0.1012 | 0.0047 |
| 3 | 0.0032 | 0.0394 | 0.0332 |
| 4 | 0.1429 | 0.1311 | 0.0011 |
| 5 | 0.0774 | 0.0979 | 0.0043 |
| 6 | 0.1071 | 0.0882 | 0.0040 |
| 7 | 0.1378 | 0.1247 | 0.0014 |
| 8 | 0.1604 | 0.1613 | 0.0000 |
| 9 | 0.1285 | 0.1034 | 0.0061 |
| 10 | 0.0307 | 0.0302 | 0.0000 |
| Total χ² divergence | | | 0.0555 |

Assuming that a call is made to a destination that falls in the first category, the system 10 updates 32 the probabilities in its short term 24 and long term 26 distributions to the values shown in Table 2.

**Table 2**

| Category | Short term probabilities | Long term probabilities | Per category χ² divergence |
|---|---|---|---|
| 1 | 0.1412 | 0.1261 | 0.0018 |
| 2 | 0.0786 | 0.1008 | 0.0049 |
| 3 | 0.0032 | 0.0392 | 0.0331 |
| 4 | 0.1415 | 0.1306 | 0.0009 |
| 5 | 0.0766 | 0.0975 | 0.0045 |
| 6 | 0.1060 | 0.0879 | 0.0038 |
| 7 | 0.1364 | 0.1242 | 0.0012 |
| 8 | 0.1588 | 0.1606 | 0.0000 |
| 9 | 0.1272 | 0.1030 | 0.0057 |
| 10 | 0.0304 | 0.0301 | 0.0000 |
| Total χ² divergence | | | 0.0558 |

These have been computed assuming that the period of the short term model 24 is 100 calls, and that of the long term model 26 is 250 calls, and hence have increased the probability of category one by 1/00 and 1/250 in the short 24 and long 26 term distributions respectively, and renormalizing each distribution. The new χ² value is computed 33 in the standard way from the sum of the squared differences between the short 24 and long 26 term probabilities of each category, divided by the long term probabilities 26, and is given at the bottom Table 2.

Assuming that the predictability measure is 0.0612, the variability measure is 0.0048, and the sensitivity parameter is 5.0 (which has been determined empirically as previously described), the alert threshold is 0.0612+5.0x0.0048 = 0.0852. Since the new value of χ² is less than the alert threshold, no alert is generated, and the predictability and variability measures are updated 35 to be (1-α)×0.0612+α×(0.0558-0.0612) = 0.0609 and (1-α)×0.0048+α×|0.0558-0.0609| ≈ 0.0048 respectively (35), where α is the reciprocal of the period of the long term distribution (i.e. 1/250) and |.| returns the magnitude of its argument.

If the new χ² value had been larger than the alert threshold an alert would have been generated 36, the predictability and variability measures would not have been updated and the probabilities in the short 24 and long 26 term probability distributions would be restored 37 to their previous values by subtracting 1/(1+100) and 1/(1+250) from the probabilities for category one and renormalizing. It should be emphasised that this example is a specific realisation of the invention and most of the details are peculiar to the realisation and not fundamental to the invention itself.

A simulated application of the invention is shown in Figure 4. Each continuous block of alerts is shown as a vertical black bar. The present invention produces a large number of change alerts in response to the change in simulated measurements and it is clear that the invention produces no change alerts outside the region of the pathological behaviour, and many within it, thus giving good discrimination. Note that although the change in the data stream shown in Figure 4 can be detected by placing a threshold on the variance of the spring length measurements, there may be other modes of failure or combinations thereof that cause changes that cannot be detected in ways that can easily be specified a priority.

The skilled addressee will realise that the present invention has the following advantages:
- The present invention can discriminate between behaviours that cannot be distinguished using thresholds and summary statistics due to the behaviour of the date stream being modelled by short term and long term probability distributions;
- The distributions and densities are estimated recursively, and hence the invention requires no explicit storage of information from the data stream;
- The invention can model multivariate and conditional properties of a data stream, making it possible to detect changes in interactions between different streams, and changes in the patterns of sequences that occur within a stream;
- The invention measures the rate of change of behaviour by measuring the divergence between the short term and long term distributions;
- The invention maintains statistics concerning the typical rate of change in the data stream that are used to compute an adaptive threshold that, in turn, controls the generation of alerts;
- The invention generates alerts when the measured divergence exceeds an adaptive threshold;
- The alerts generated by the invention contain detailed information about its cause - i.e. the way in which the stream's behaviour has changed;
- The invention estimates the amount by which its internal sensitivity would need to be adjusted in order to produce an alert rate of around one percent; and
- The invention can be forced to adjust its internal sensitivity by an externally specified amount, or according to its own internal estimate.

The skilled addressee will realise that the present invention is applicable to detecting changes in the properties of data streams originating from various sources. Even though the example provided of the present invention was for telecommunications fraud detection, the present invention may be suitable for numerous other applications where data contains information about some entity or process. Examples include but are not limited to: credit card fraud detection system; computer network security; process, fault and condition monitoring; environmental monitoring systems; and health monitoring systems. Such modifications and variations as would be readily apparent to the skilled addressee to enable the present invention to detect changes in the properties of data streams from various sources are intended to fall within the scope of the present invention, the nature of which is to be determined from the foregoing description and appended claims.

## Claims

1. A method of detecting changes in a data stream (12) comprising the steps of:
maintaining (32) a short term distribution (24) that models the data stream, wherein the short term distribution is updated when the input is received;
maintaining (32) a long term distribution (26) that models the data stream, wherein the long term distribution is updated when the input data is received;
determining (33) a difference between the short term distribution (24) and the long term distribution (26); and
applying a statistical measure (16) to the difference and generating an alert (22) if the measure of the difference exceeds a threshold,
**characterised in that** the method further comprises the step of:
returning at least one of the short term distribution and the long term distribution to a state just before it was updated to include the input that caused the alert when the alert (22) is generated.

2. A method according to claim 1, wherein the short term distribution (24) is a model of probability distributions that describe the data stream (12).

3. A method according to claim 1 or 2, wherein the long term distribution (26) is a model of probability distributions that describe the data stream (12).

4. A method according to claim 1, 2 or 3, wherein the short term distribution (24) is a recursively estimated weighted distribution of all the data received thus far.

5. A method according to any one of claims 1 to 4, wherein the long term distribution (26) is a recursively estimated weighted distribution of all of the data received thus far.

6. A method according to any one of claims 1 to 5, wherein the short term distribution (24) weights recent information more heavily than the long term distribution (26).

7. A method according to any one of claims 1 to 6, wherein when an alert is generated, both the long term distribution (24) and the short term distribution (26) are returned to states they were just before they were updated to include an input that caused the alert.

8. A method according to any one of claims 1 to 6, wherein when an alert is generated, only the short term distribution is returned to a state just before it was updated to include an input that caused the alert.

9. A method according to any one of claims 1 to 6, wherein when an alert is generated, only the long term distribution is returned to a state just before it was updated to include an input that caused the alert.

10. A method according to any one of claims 1 to 9, wherein an alert (22) is generated if the difference exceeds an adaptive alert threshold (20).

11. A method according to claim 10, wherein the adaptive alert threshold (20) is a function of the short term (24) and the long term distributions (26) and previous values of the alert threshold.

12. A method according to claim 10, wherein the adaptive alert threshold (20) is formed from a predictability measure and a variability measure (35).

13. A method according to claim 12, wherein the predictability measure is a moving average of the difference between the short term distribution (24) and the long term distribution (26).

14. A method according to claim 12 or 13, wherein the variability measure is a moving average of the absolute difference between the short term distribution (24) and the long term distribution and the predictability measure (26).

15. A method according to claim 12, 13 or 14, wherein the predictability and variability measures (35) are not updated when the measured difference between the short term distribution (24) and the long term distribution (26) exceeds a function of the variability measure.

16. A method according to any one of claims 10 to 15, wherein the alert (22) generated includes information in the data stream (12) and/or a function of information in the data stream (12).

17. A method according to claim 16, wherein the alert (22) generated includes a propensity measure as an indication of the severity of change.

18. A method according to claim 17, wherein the propensity measure is calculated by dividing the difference between the measure of difference between the short term distribution (24) and the long term distribution (26) and the alert threshold by the variability measure (35).

19. A method according to any one of claims 1 to 18, wherein the method includes a step of maintaining (37) an estimate of the amounts by which a sensitivity to the alert threshold would be needed to have been adjusted in order to not have generated an alert (22) that turned out not to be caused by an event of interest since the last time it was instructed to adapt.

20. A method according to claim 19, wherein the sensitivity adjustment estimate is increased (37) by an additive constant each time an alert is generated (36) and decays exponentially with each input received.

21. A method according to any one of claims 1 to 20, wherein a lead period may be provided during which alerts (22) cannot be generated and the short term distribution (24) and the long term distribution (26) are adapted to all inputs within that period.

22. A method according to any one of claims 1 to 21, wherein alerts (22) may be suppressed from being generated by inputs that are above a configurable lower percentile or below a configurable upper percentile.

23. A method according to claim 22, wherein the lower percentile and upper percentile are both estimated from the long term probability distribution.

24. A method according to any one of claims 1 to 23, wherein the short term and long term distributions model discrete values.

25. A method according to any one of claims 1 to 23, wherein the short term (24) and long term distributions (26) model continuous values.

26. A method according to any one of claims 1 to 22, wherein the data stream (12) represents credit card-related data.

27. A method according to any one of claims 1 to 22, wherein the data stream (12) represents computer network data.

28. A method according to any one of claims 1 to 22, wherein the data stream (12) represents process status or measurement-related data.

29. A method according to any one of claims 1 to 22, wherein the data stream (12) represents environmental monitoring system-related data.

30. A method according to any one of claims 1 to 22, wherein the data stream (12) represents health monitoring-related data.

31. A system (10) for detecting changes in a data stream comprising:
distribution maintenance engine (14) configured to:
maintain (32) a short term distribution (24) that models data stream, wherein the short term distribution is updated when input data is received; and
maintain (32) a long term distribution (26) that models the data stream, wherein the long term distribution is updated when the input data is received;
means (16) for determining a difference between the short term distribution and the long term distribution, and
an alert generation engine (18) configured to apply a statistical measure to the difference and to generate an alert if the measure of the difference exceeds a threshold,
**characterised in that** the distribution maintenance engine is further configured to return at least one of the short term distribution and the long term distribution to a state just before it was updated to include the input that caused the alert when the alert (22) is generated.

32. A system according to claim 31, further comprising a threshold adaption engine (20) configured adaptively to determine the threshold.

33. A system according to claim 31 or 32, wherein the distribution maintenance engine (14) is configured to return only the short term distribution (24) to a state just before it was updated, when an alert is generated.

34. A system according to claim 31 or 32, wherein the distribution maintenance engine (14) is configured to return only the long term distribution (26) to a state just before it was updated, when an alert is generated.

35. A system according to claim 31 or 32, wherein the distribution maintenance engine is configured to return both the distributions (24, 26) to the states just before they were updated, when an alert is generated.

## Patentansprüche

1. Verfahren zum Detektieren von Änderungen in einem Datenstrom (12) mit den Schritten:
Aufrechterhalten (32) einer Kurzzeitverteilung (24), die den Datenstrom modelliert, wobei die Kurzzeitverteilung aktualisiert wird, wenn die Eingabe empfangen wird;
Aufrechterhalten (32) einer Langzeitverteilung (26), die den Datenstrom modelliert, wobei die Langzeitverteilung aktualisiert wird, wenn Eingabedaten empfangen werden;
Bestimmen (33) einer Differenz zwischen der Kurzzeitverteilung (24) und der Langzeitverteilung (26); und
Anwenden eines statistischen Maßes (16) auf die Differenz und Erzeugen eines Alarms (22), wenn das Maß der Differenz einen Schwellenwert überschreitet;
**dadurch gekennzeichnet, dass** das Verfahren ferner den Schritt aufweist:
Zurückgeben von mindestens einer von der Kurzzeitverteilung und der Langzeitverteilung zu einem Zustand unmittelbar bevor sie aktualisiert worden ist, um die Eingabe, die den Alarm verursacht hat, wenn der Alarm (22) erzeugt wird, miteinzubeziehen.

2. Verfahren nach Anspruch 1, wobei die Kurzzeitverteilung (24) ein Modell von Wahrscheinlichkeitsteilungen ist, die den Datenstrom (12) beschreiben.

3. Verfahren nach Anspruch 1 oder 2, wobei die Langzeitverteilung (26) ein Modell von Wahrscheinlichkeitsverteilungen ist, die den Datenstrom (12) beschreiben.

4. Verfahren nach Anspruch 1, 2 oder 3, wobei die Kurzzeitverteilung (24) eine rekursiv geschätzte gewichtete Verteilung aller bisher empfangenen Daten ist.

5. Verfahren nach einem der Ansprüche 1 bis 4, wobei die Langzeitverteilung (26) eine rekursiv geschätzte gewichtete Verteilung aller bisher empfangenen Daten ist.

6. Verfahren nach einem der Ansprüche 1 bis 5, wobei die Kurzzeitverteilung (24) letzte Information stärker gewichtet als die Langzeitverteilung (26).

7. Verfahren nach einem der Ansprüche 1 bis 6, wobei, wenn ein Alarm erzeugt wird, beide, die Langzeitverteilung (24) und die Kurzzeitverteilung (26) in Zustände zurückgebracht werden, wie sie unmittelbar vor ihrer Aktualisierung waren, um eine Eingabe, die den Alarm verursacht hat, miteinzubeziehen.

8. Verfahren nach einem der Ansprüche 1 bis 6, wobei, wenn ein Alarm erzeugt wird, nur die Kurzzeitverteilung in einen Zustand zurückgebracht wird, wie er unmittelbar vor ihrer aktualisiert war, um eine Eingabe, die den Alarm verursacht hat, miteinzubeziehen.

9. Verfahren nach einem der Ansprüche 1 bis 6, wobei, wenn ein Alarm erzeugt wird, nur die Langzeitverteilung in einen Zustand zurückgebracht wird, wie er unmittelbar vor ihrer aktualisiert war, um eine Eingabe, die den Alarm verursacht hat, miteinzubeziehen.

10. Verfahren nach einem der Ansprüche 1 bis 9, wobei ein Alarm (22) erzeugt wird, wenn die Differenz einen adaptiven Alarmschwellenwert (20) überschreitet.

11. Verfahren nach Anspruch 10, wobei der adaptive Alarmschwellenwert (20) eine Funktion der Kurzzeitverteilung (24) und der Langzeitverteilung (26) und vorherigen Werten des Alarmschwellenwerts ist.

12. Verfahren nach Anspruch 10, wobei der adaptive Alarmschwellenwert (20) aus einem Vorhersagbarkeitsmaß und einem Variabilitätsmaß (35) gebildet wird.

13. Verfahren nach Anspruch 12, wobei das Vorhersagbarkeitsmaß ein wandernder Mittelwert der Differenz zwischen der Kurzzeitverteilung (24) und der Langzeitverteilung (26) ist.

14. Verfahren nach Anspruch 12 oder 13, wobei das Variabilitätsmaß ein wandernder Mittelwert der absoluten Differenz zwischen der Kurzzeitverteilung (24) und der Langzeitverteilung und dem Vorhersagbarkeitsmaß (26) ist.

15. Verfahren nach Anspruch 12, 13 oder 14, wobei die Vorhersagbarkeits- und Variabilitätsmaße nicht aktualisiert werden, wenn die gemessene Differenz zwischen der Kurzzeitverteilung (24) und der Langzeitverteilung (26) eine Funktion des Variabilitätsmaßes überschreitet.

16. Verfahren nach einem der Ansprüche 10 bis 15, wobei der erzeugte Alarm (22) eine Information in dem Datenstrom (12) und/oder eine Funktion von Information in dem Datenstrom (12) aufweist.

17. Verfahren nach Anspruch 16, wobei der erzeugte Alarm (22) ein Neigungsmaß aufweist, als eine Angabe für den Grad der Änderung.

18. Verfahren nach Anspruch 17, wobei das Neigungsmaß berechnet wird durch Teilen der Differenz zwischen dem Maß der Differenz zwischen der Kurzzeitverteilung (24) und der Langzeitverteilung (26) und dem Alarmschwellenwert durch das Variabilitätsmaß (35).

19. Verfahren nach einem der Ansprüche 1 bis 18, wobei das Verfahren einen Schritt des Aufrechterhaltens (37) einer Schätzung der Größen aufweist, für die eine Empfindlichkeit für den Alarmschwellenwert hätte eingestellt hätte werden müssen, damit kein Alarm (22) erzeugt worden wäre, bei dem sich herausgestellt hätte, dass er nicht durch ein Ereignis, das von Interesse gewesen wäre, erzeugt worden wäre, seit dem letzten Anweisen für ihre Einstellung.

20. Verfahren nach Anspruch 19, wobei die Empfindlichkeitseinstellungsschätzung erhöht wird (37) durch eine additive Konstante, jedes Mal wenn ein Alarm erzeugt wird (36) und exponential reduziert wird mit jeder empfangenen Eingabe.

21. Verfahren nach einem der Ansprüche 1 bis 20, wobei eine Führungsperiode bereitgestellt werden kann, während der keine Alarme (22) erzeugt werden können, und die Kurzzeitverteilung (24) und die Langzeitverteilung (26) angepasst werden für alle Eingaben innerhalb dieser Periode.

22. Verfahren nach einem der Ansprüche 1 bis 21, wobei das Erzeugen der Alarme (22) unterdrückt werden kann, durch Eingaben, die oberhalb eines konfigurierbaren unteren Perzentilwerts oder unterhalb eines konfigurierbaren oberen Perzentilwerts sind.

23. Verfahren nach Anspruch 22, wobei der untere Perzentilwert und der obere Perzentilwert beide aus der langfristigen Wahrscheinlichkeitsverteilung geschätzt werden.

24. Verfahren nach einem der Ansprüche 1 bis 23, wobei die Kurzzeitverteilung und die Langzeitverteilung diskrete Werte modellieren.

25. Verfahren nach einem der Ansprüche 1 bis 23, wobei die Kurzzeitverteilung (24) und die Langzeitverteilung (26) kontinuierliche Werte modellieren.

26. Verfahren nach einem der Ansprüche 1 bis 22, wobei der Datenstrom (12) kreditkartenbezogene Daten darstellt.

27. Verfahren nach einem der Ansprüche 1 bis 22, wobei der Datenstrom (12) Computernetzwerkdaten darstellt.

28. Verfahren nach einem der Ansprüche 1 bis 22, wobei der Datenstrom (12) einen Prozessstatus oder messbezogene Daten darstellt.

29. Verfahren nach einem der Ansprüche 1 bis 22, wobei der Datenstrom (12) umgebungsüberwachungssystembezogene Daten darstellt.

30. Verfahren nach einem der Ansprüche 1 bis 22, wobei der Datenstrom (12) gesundheitsüberwachungsbezogene Daten darstellt.

31. System (10) zum Detektieren von Änderungen in einem Datenstrom, mit einer Verteilungsaufrechterhaltungsmaschine (14), die konfiguriert ist zum
Aufrechterhalten (32) einer Kurzzeitverteilung (24), die den Datenstrom modelliert, wobei die Kurzzeitverteilung aktualisiert wird, wenn Eingabedaten empfangen werden, und
Aufrechterhalten (32) einer Langzeitverteilung (26), die den Datenstrom modelliert, wobei die Langzeitverteilung aktualisiert wird, wenn die Eingabedaten empfangen werden;
einem Mittel (16) zum Bestimmen einer Differenz zwischen der Kurzzeitverteilung und der Langzeitverteilung; und
einer Alarmerzeugungsmaschine (18), die konfiguriert ist zum Anwenden eines statistischen Maßes auf die Differenz und zum Erzeugen eines Alarms, wenn das Maß der Differenz einen Schwellenwert überschreitet,
**dadurch gekennzeichnet, dass** die Verteilungsaufrechterhaltungsmaschine ferner konfiguriert ist zum Zurückbringen von mindestens einer von der Kurzzeitverteilung und der Langzeitverteilung zu einem Zustand unmittelbar vor ihrer Aktualisierung, um die Eingabe, die den Alarm verursacht hat, wenn der Alarm (22) erzeugt wird, miteinzubeziehen.

32. System nach Anspruch 31, ferner mit einer Schwellenwertadaptionsmaschine (20), die konfiguriert ist zum adaptiven Bestimmen des Schwellenwerts.

33. System nach Anspruch 31 oder 32, wobei die Verteilungsaufrechterhaltungsmaschine (14) konfiguriert ist, um nur die Kurzzeitverteilung (24) in einen Zustand zurückzubringen unmittelbar vor ihrer Aktualisierung, wenn ein Alarm erzeugt wird.

34. System nach Anspruch 31 oder 32, wobei die Verteilungsaufrechterhaltungsmaschine (14) konfiguriert ist, um nur die Langzeitverteilung (26) in einen Zustand zurückzubringen unmittelbar vor ihrer Aktualisierung, wenn ein Alarm erzeugt wird.

35. System nach Anspruch 31 oder 32, wobei die Verteilungsaufrechterhaltungsmaschine konfiguriert ist um beide Verteilungen (24, 26) in die Zustände zurückzubringen unmittelbar bevor deren aktualisiert, wenn ein Alarm erzeugt wird.

## Revendications

1. Procédé de détection de changements dans un flux de données (12) comprenant les étapes de :
maintenir (32) une distribution à court terme (24) qui modélise le flux de données, la distribution à court terme étant mise à jour lorsque l'entrée est reçue ;
maintenir (32) une distribution à long terme (26) qui modélise le flux de données, la distribution à long terme étant mise à jour lorsque les données d'entrée sont reçues ;
déterminer (33) une différence entre la distribution à court terme (24) et la distribution à long terme (26) ; et
appliquer une mesure statistique (16) à la différence et générer une alerte (22) si la mesure de la différence dépasse un seuil,
**caractérisé en ce que** le procédé comprend en outre l'étape de :
ramener au moins l'une de la distribution à court terme et de la distribution à long terme à un état juste avant sa mise à jour pour inclure l'entrée qui a provoqué l'alerte lorsque l'alerte (22) est générée.

2. Procédé selon la revendication 1, dans lequel la distribution à court terme (24) est un modèle de distributions de probabilités qui décrit le flux de données (12).

3. Procédé selon la revendication 1 ou 2, dans lequel la distribution à long terme (26) est un modèle de distributions de probabilités qui décrit le flux de données (12).

4. Procédé selon la revendication 1, 2 ou 3, dans lequel la distribution à court terme (24) est une distribution pondérée estimée de manière récursive de toutes les données reçues jusqu'ici.

5. Procédé selon l'une quelconque des revendications 1 à 4, dans lequel la distribution à long terme (26) est une distribution pondérée estimée de manière récursive de toutes les données reçues jusqu'ici.

6. Procédé selon l'une quelconque des revendications 1 à 5, dans lequel la distribution à court terme (24) pondère des informations récentes plus fortement que la distribution à long terme (26).

7. Procédé selon l'une quelconque des revendications 1 à 6, dans lequel lorsqu'une alerte est générée, à la fois la distribution à long terme (24) et la distribution à long terme (26) sont ramenées à des états dans lesquels elles se trouvaient juste avant leur mise à jour pour inclure une entrée qui a provoqué l'alerte.

8. Procédé selon l'une quelconque des revendications 1 à 6, dans lequel lorsqu'une alerte est générée, uniquement la distribution à court terme est ramenée à un état dans lequel elle se trouvait juste avant sa mise à jour pour inclure une entrée qui a provoqué l'alerte.

9. Procédé selon l'une quelconque des revendications 1 à 6, dans lequel lorsqu'une alerte est générée, uniquement la distribution à long terme est ramenée à un état dans lequel elle se trouvait juste avant sa mise à jour pour inclure une entrée qui a provoqué l'alerte.

10. Procédé selon l'une quelconque des revendications 1 à 9, dans lequel une alerte (22) est générée si la différence dépasse un seuil d'alerte adaptatif (20).

11. Procédé selon la revendication 10, dans lequel le seuil d'alerte adaptatif (20) est une fonction des distributions à court terme (24) et à long terme (26) et de valeurs précédentes du seuil d'alerte.

12. Procédé selon la revendication 10, dans lequel le seuil d'alerte adaptatif (20) est formé à partir d'une mesure de prévisibilité et d'une mesure de variabilité (35).

13. Procédé selon la revendication 12, dans lequel la mesure de prévisibilité est une moyenne mobile de la différence entre la distribution à court terme (24) et la distribution à long terme (26).

14. Procédé selon la revendication 12 ou 13, dans lequel la mesure de variabilité est une moyenne mobile de la différence absolue entre la distribution à court terme (24) et la distribution à long terme (26) et la mesure de prévisibilité.

15. Procédé selon la revendication 12, 13 ou 14, dans lequel les mesures de prévisibilité et de variabilité (35) ne sont pas mises à jour lorsque la différence mesurée entre la distribution à court terme (24) et la distribution à long terme (26) dépasse une fonction de la mesure de variabilité.

16. Procédé selon l'une quelconque des revendications 10 à 15, dans lequel l'alerte (22) générée inclut des informations dans le flux de données (12) et/ou une fonction d'informations dans le flux de données (12).

17. Procédé selon la revendication 16, dans lequel l'alerte (22) générée inclut une mesure de propension en tant qu'indication de la gravité de changement.

18. Procédé selon la revendication 17, dans lequel la mesure de propension est calculée en divisant la différence entre la mesure de différence entre la distribution à court terme (24) et la distribution à long terme (26) et le seuil d'alerte par la mesure de variabilité (35).

19. Procédé selon l'une quelconque des revendications 1 à 18, dans lequel le procédé inclut une étape de maintenir (37) une estimation des quantités desquelles une sensibilité au seuil d'alerte aurait due avoir été ajustée afin de ne pas déclencher une alerte (22) qui se serait avérée ne pas être due à un évènement d'intérêt depuis la dernière fois où son adaptation a été ordonnée.

20. Procédé selon la revendication 19, dans lequel l'estimation d'ajustement de sensibilité est accrue (37) par une constante additive à chaque fois qu'une alerte est générée (36) et décline de manière exponentielle avec chaque entrée reçue.

21. Procédé selon l'une quelconque des revendications 1 à 20, dans lequel une période de suite peut être fournie pendant laquelle des alertes (22) ne peuvent pas être générées et la distribution à court terme (24) et la distribution à long terme (26) sont adaptées à toutes les entrées au cours de cette période.

22. Procédé selon l'une quelconque des revendications 1 à 21, dans lequel la génération d'alertes (22) peut être supprimée par des entrées qui sont au-dessus d'un centile inférieur configurable ou au-dessous d'un centile supérieur configurable.

23. Procédé selon la revendication 22, dans lequel le centile inférieur et le centile supérieur sont tous les deux estimés à partir de la distribution de probabilités à long terme.

24. Procédé selon l'une quelconque des revendications 1 à 23, dans lequel les distributions à court terme et à long terme modélisent des valeurs discrètes.

25. Procédé selon l'une quelconque des revendications 1 à 23, dans lequel les distributions à court terme (24) et à long terme (26) modélisent des valeurs continues.

26. Procédé selon l'une quelconque des revendications 1 à 22, dans lequel le flux de données (12) représente des données associées à une carte de crédit.

27. Procédé selon l'une quelconque des revendications 1 à 22, dans lequel le flux de données (12) représente des données de réseau informatique.

28. Procédé selon l'une quelconque des revendications 1 à 22, dans lequel le flux de données (12) représente des données associées à une mesure ou à un état de processus.

29. Procédé selon l'une quelconque des revendications 1 à 22, dans lequel le flux de données (12) représente des données associées à un système de surveillance de l'environnement.

30. Procédé selon l'une quelconque des revendications 1 à 22, dans lequel le flux de données (12) représente des données associées à une surveillance médicale.

31. Système (10) pour détecter des changements dans un flux de données comprenant :
un moteur de maintenance de distribution (14) configuré pour :
maintenir (32) une distribution à court terme (24) qui modélise le flux de données, la distribution à court terme étant mise à jour lorsque des données d'entrée sont reçues ; et
maintenir (32) une distribution à long terme (26) qui modélise le flux de données, la distribution à long terme étant mise à jour lorsque des données d'entrée sont reçues ;
des moyens (16) pour déterminer une différence entre la distribution à court terme (24) et la distribution à long terme (26) ; et
un moteur de génération d'alerte (18) configuré pour appliquer une mesure statistique (16) à la différence et pour générer une alerte si la mesure de la différence dépasse un seuil,
**caractérisé en ce que** le moteur de maintenance de distribution est en outre configuré pour ramener au moins l'une de la distribution à court terme et de la distribution à long terme à un état juste avant sa mise à jour pour inclure l'entrée qui a provoqué l'alerte lorsque l'alerte (22) est générée.

32. Système selon la revendication 31, comprenant en outre un moteur d'adaptation de seuil (20) configuré de manière adaptative pour déterminer le seuil.

33. Système selon la revendication 31 ou 32, dans lequel le moteur de maintenance de distribution (14) est configuré pour ramener uniquement la distribution à court terme (24) à un état juste avant sa mise à jour, lorsqu'une alerte est générée.

34. Système selon la revendication 31 ou 32, dans lequel le moteur de maintenance de distribution (14) est configuré pour ramener uniquement la distribution à long terme (26) à un état juste avant sa mise à jour, lorsqu'une alerte est générée.

35. Système selon la revendication 31 ou 32, dans lequel le moteur de maintenance de distribution est configuré pour ramener les deux distributions (24, 26) à des états juste avant leur mise à jour, lorsqu'une alerte est générée.
